# EUROPÄISCHE PATENTANMELDUNG

(11) **EP 0 811 645 A2**
(43) Veröffentlichungstag der Anmeldung: **10.12.1997**
(21) Anmeldenummer: 97108500.6
(22) Anmeldetag: 27.05.1997
(51) Int. Cl.: C08G 18/42, C08K 5/521, C08K 5/5337

(54) **Phasenstabile Polyolkomponente**

(30) Priorität: 04.06.1996 DE 19622333
(71) Anmelder: BASF AKTIENGESELLSCHAFT, 67056 Ludwigshafen (DE)
(72) Erfinder: Forster, Heinz, 82515 Wolfratshausen (DE); Reese, Hans-Juergen, 82140 Olching (DE)

(57) **Zusammenfassung**

Phasenstabile Polyolkomponente, enthaltend
A1) mindestens einen Polyether- und/oder Polyetheresterpolyalkohol,
A2) mindestens ein Polyesterpolyol
A3) mindestens ein flüssiges additives Flammschutzmittel
wobei die Bestandteile A1:A2:A3 im Gewichtsverhältnis 10±4,5:13±4:14±4,5 vorliegen.

## Beschreibung

Die Erfindung betrifft eine phasenstabile Polyolkomponente, die zur Herstellung von gegebenenfalls zellhaltigen Polyurethanen verwendet werden kann.

Einkomponenten-Polyurethanschäume aus Aerosoldosen, im folgenden als Aerosolschäume bezeichnet, sind im Bauwesen häufig angewendete Montagemittel zum Einbau von Fenstern und Türen oder als Füllmaterial für bautechnisch bedingte Hohlräume. In den Aerosoldosen befindet sich zumeist ein NCO-gruppenterminiertes Prepolymer sowie Treibmittel und Zusätze. Durch Austragen des Doseninhalts mittels Treibmittel, dem Aufschäumen sowie dem Aushärten des Schaumes mittels Luftfeuchtigkeit entsteht der gewünschte Schaum.

Das Prepolymer kann dabei sowohl innerhalb als auch außerhalb der Aerosoldose hergestellt werden. Nach der Bildung bzw. dem Einfüllen des Prepolymers wird die Aerosoldose verschlossen, mit Treibmittel beaufschlagt und danach gegebenenfalls geschüttelt, um eine intensive Durchmischung des Doseninhalts zu bewirken.

Um eine optimale Verteilung des Schaumes in den auszuschäumenden Fugen oder Hohlräumen zu bewirken, ist eine niedrige Viskosität der Prepolymeren anzustreben. In der Vergangenheit trugen die als Treibmittel gebräuchlichen Fluorchlorkohlenwasserstoffe zu einer Viskositätserniedrigung bei. Da ein weiterer Einsatz dieser Verbindungen aus Umweltschutzgründen nicht möglich ist, wurde vielfach, wie beispielsweise in DE-A-4 025 843 oder EP-A-480 343 beschrieben, dem Prepolymeren Weichmacher oder Lösungsmittel zugesetzt. Die Mitverwendung derartiger Verbindungen führt jedoch, da sie nicht in den Schaum eingebaut werden, zu einem starken Schrumpf der Schäume.

Durch die geschilderten Viskositätsprobleme war es bisher nicht üblich, Polyesteralkohole als Polyolkomponente für Aerosolschäume einzusetzen. Das wäre jedoch aus mehreren Gründen wünschenswert. Zum einen können in Polyesteralkohole problemlos hohe Anteile an aromatischen Strukturen eingebaut werden, beispielsweise durch Verwendung von Phthalsäure und/oder Terephthalsäure als Säurekomponente, und damit die Flammfestigkeit der Schäume entscheidend verbessert werden. Außerdem stehen Recyclingpolyesteralkohole zur Verfügung, die aus Polyalkylenterephthalatabfällen, beispielsweise von Getränkeflaschen oder aus der Kunstfaserindustrie, hergestellt werden und über einen hohen Aromatenanteil verfügen. die Herstellung dieser Recyclingpolyole erfolgt durch Umsetzung der Polyalkylenterephthalate mit niederen mehrfunktionellen Alkoholen, beispielsweise Ethylenglykol und Dicarbonsäuren.

Ziel der vorliegenden Erfindung war es, Recyclingpolyole aus Polyalkylenterephthalaten in Polyolkomponenten einzuarbeiten, ohne daß es zu Entmischungserscheinungen in der Polyolkomponente kommt und eine Weiterverarbeitung zu Polyurethanen, insbesondere Polyurethan-Aerosolschäumen, möglich ist.

Die Aufgabe konnte überraschenderweise gelöst werden durch eine phasenstabile Polyolkomponente, enthaltend
A1) mindestens ein Polyether- und/oder Polyesterpolyol,
A2) mindestens ein Polyesterpolyol,
A3) mindestens ein flüssiges additives Flammschutzmittel,
wobei das Gewichtsverhältnis der Bestandteile A1:A2:A3 gleich 10±4, 5:13±4: 14±4,5 ist.

Gegenstand der vorliegenden Erfindung ist demzufolge die genannte phasenstabile Polyolkomponente, ihre Verwendung zur Herstellung von Polyurethanen sowie die so hergestellten Polyurethane.

Die Komponente A1 hat ein mittleres Molekulargewicht von mindestens 500, insbesondere mindestens 600 g/mol. Sie enthält 5 bis 95 Gew.-%, bezogen auf A1, mindestens einen alkoxylierten Fettsäureester. Bevorzugt verwendet wird hierbei beispielsweise alkoxyliertes Rizinusöl, dessen mittleres Molekulargewicht mindestens 1100 g/mol betragen sollte. Eine weitere vorteilhafte Verbindungsklasse von A1 sind alkoxylierte Glycerin-Fettsäureester, insbesondere Gemische aus Glycerinestern von dimeren Fettsäuren mit Anteilen von monomeren Fettsäuren und trimeren Fettsäuren mit bis zu 20 % freiem Glycerin. Hierbei handelt es sich zumeist um mit Glyzerin veresterte dimere Fettsäuren, die technische Verunreinigungen aus monomeren Fettsäuren und trimeren Fettsäuren enthalten. Als Alkylenoxid wird hierbei vorzugsweise Ethylenoxid eingesetzt. Durch die Ethermodifizierung wird eine Hydrophilie der Naturstoffe erreicht und damit das Aushärteverhalten des Schaumes verbessert, andererseits werden die Struktureigenschaften der Naturstoffe weitgehend übernommen, was sich auf die mechanischen Eigenschaften der Schäume sehr positiv auswirkt.

Vorzugsweise eingesetzt werden Gemische aus ethoxylierten Glycerin-Fettsäureestern mit einem mittleren Molekulargewicht von 1000-3800 g/mol und ethoxyliertem Rizinusöl mit einem mittleren Molekulargewicht von mindestens 1100 g/mol, vorzugsweise im Bereich von 1300 bis 4000 g/mol.

Bei höheren Molekulargewichten der alkoxylierten Fettsäureester kann es zu einer zu starken Erhöhung der Viskosität und damit zu Problemen bei der Verschäumung kommen.

Als weiterer Mischungsbestandteil werden die in der Polyurethanherstellung üblicherweise verwendeten Polyetherpolyole, wie sie beispielsweise im Kunststoffhandbuch, Band 7 "Polyurethan", herausgegeben von Günter Oertel, 3. Auflage, Carl-Hauser Verlag München, 1993, auf den Seiten 58-67, beschrieben sind.

Als Komponente A2 können die in der Polyurethanchemie üblichen und bekannten Polyesterpolyole, wie sie beispielsweise im Kunststoffhandbuch a.a.O. S. 67-74 beschrieben werden. Insbesondere geeignet sind jedoch Umsetzungsprodukte aus Polyalkylenterephthalatabfällen mit einer Dicarbonsäure oder einem Dicarbonsäuregemisch und einem Diglykol.

Polyalkylenterephthalate sind vielseitig verwendete Materialien. Ein wesentliches Einsatzgebiet von Polyalkylenterephthalat, insbesondere Polyethylenterephthalat (PET), ist die Herstellung von Getränkeflaschen. Nach Gebrauch werden die Flaschen erfaßt und zerkleinert. Diese Abfälle können durch Umesterung zu Polyesterpolyolen verarbeitet werden.

Eine weitere Möglichkeit der Herstellung von Polyalkylenterephthalat-Recyclatpolyolen besteht in der Aufarbeitung von Abfällen aus der Polyethylenterephthalat-Kunstfaserproduktion durch Oligomerisierung der Faserabfälle durch mehrstündiges Erhitzen in kurzkettigen Glykolen, insbesondere Diethylenglykol.

Diese Polyole haben zumeist Hydroxylzahlen von etwa 70 mg KOH/g, Säurenzahlen um 0,5 mg KOH/g und Viskositäten von ca. 40.000 mPa.s bei 25°C.

Ihr Hauptvorteil besteht in ihrem hohen Aromatengehalt. Übliche aromatenhaltige, durch Veresterung aromatischer Carbonsäuren hergestellte Polyesterole sind auf Grund ihrer langen Chargenlaufzeiten schwierig herzustellen.

Als Komponente A3 der erfindungsgemäßen Polyolkomponente dienen flüssige additive Flammschutzmittel, insbesondere Phoshor enthaltende organische Verbindungen, vorzugsweise Alkylphosphate und/oder Alkylphosphonate Besonders bevorzugt sind wegen ihrer sehr guten Wirksamkeit halogenierte, insbesondere chlorierte Alkylphosphate und/oder Alkylphosphonate, wie sie beispielsweise im Kunststoffhandbuch, Band 7, Polyurethane, 3. Auflage, 1993, Carl-Hanser-Verlag, München, beschrieben sind..

Überraschenderweise ist die erfindungsgemäße Polyolkomponente völlig phasenstabil. Auch bei längerer Lagerung tritt keine Entmischung auf. Aufgrund ihrer niedrigen Viskosität ist sie sehr gut zu Polyurethanen verarbeitbar. Die unter Verwendung der Polyolkomponente hergestellten Polyurethane zeigen, aufgrund des hohen Aromatenanteils in Kombination mit dem phosphorhaltigen Flammschutzmittel, eine sehr gute Flammfestigkeit. Dabei kann der Einsatz von halogenhaltigen polyolischen Flammschutzmitteln reduziert oder ganz vermieden werden.

Zur Weiterverarbeitung zu Polyurethanen kann die erfindungsgemäße Polyolkomponente mit den Bestandteilen und Zusatzstoffen, die üblicherweise in der Polyolkomponente eines Polyurethansystems enthalten sind, gemischt werden, ohne daß es zu einer Beeinträchtigung der Phasenstabilität kommt.

Als Mischungsbestandteile seien hier genannt kurzkettige Diole als Kettenverlängerer, kurzkettige drei- oder höherfunktionelle Alkohole als Vernetzer, Katalysatoren, Treibmittel, Stabilisatoren, Farbstoffe sowie das Molgewicht während der Prepolymersynthese steuernde Monoole.

Als Polyurethankatalysatoren geeignet sind stark basische Amine oder organische Metallverbindungen, vorzugsweise Zinnverbindungen oder synergistisch wirkende Kombinationen aus stark basischen Aminen und organischen Zinnverbindungen. Als stark basische Amine seien beispielhaft genannt: Amide, wie z.B. 2,3-Dimethyl-3,4,5,6-tetrahydropyrimidin, Tris-(dialkylaminoalkyl)-s-hexahydrotriazine, wie z.B. Tris-(N,N-dimethylaminopropyl)-s-hexahydrotriazin und vorzugsweise tertiäre Amine, wie z.B. Triethylamin, Tributylamin, Dimethylbenzylamin, N-Methyl-, N-Ethyl-, N-Cyclohexylmorpholin, Dimorpholinodiethylether, N,N,N',N'-Tetramethylethylendiamin, N,N,N',N'-Tetramethyl-butandiamin, N,N,N',N'-Tetramethyl-hexandiamin-1,6, Pentamethyldiethylentriamin, Tetramethyldiaminoethylether, Bis-(dimethylaminopropyl)-harnstoff, Dimethylpiperazin, 1,2-Dimethylimidazol, Di-(4-N,N-dimethylaminocyclohexyl)-methan, 1-Aza-bicyclo-(3,3,0)-octan und 1,4-Diaza-bicyclo-(2,2,2)-oktan. Als organische Zinnverbindungen kommen z.B. in Betracht: Zinn-(II)-salze von organischen Carbonsäuren, z.B. Zinn-(II)-diacetat, Zinn-(II)-dioktoat, Zinn-(II)-diethylhexoat und Zinn-(II)-dilaurat und die Dialkyl-zinn-(IV)-salze von organischen Carbonsäuren, z.B. Dibutylzinn-diacetat, Dibutylzinn-dilaurat, Dibutylzinnmaleat Dibutylzinn-dimercaptid und Dioktylzinn-diacetat.

Als Stabilisatoren eignen sich Siloxan-oxyalkylen-copolymere. Als Treibmittel eignen sich Flüssiggase sowie Substanzen mit einem niedrigen Siedepunkt beispielsweise seien genannt Dimethylether, Propan, n- oder iso-Butan, Pentan, Methylisobutylether, sowie halogenierte Kohlenwasserstoffe wie z.B. Dichlorfluormethan, Monofluortrichlormethan, Trifluortrichlorethan, Trifluormethan, 1,1-Dichlor-1-fluorethan, Monochlortrifluorethan, Monochlordifluorethan, Difluorethan, Dichlortrifluorethan, Monochlortetrafluorethan, Pentafluorethan, Tetrafluorethan, Dichlormonofluorethan.

Das Gesamtgemisch besitzt damit den für die Verwendung als Aufbaukomponente für einen Einkomponenten Polyurethan-polyharnstoff-Aerosolschaum nötigen hydrophilen Charakter, ist eine homogene Flüssigphase unter Verwendung von Polyestern und Polyethern und enthält das spezielle Recyclingpolyol sowie die modifizierten Naturstoffpolyole in eigenschaftsbestimmenden Anteilen.

Bei Nichteinhaltung der erfindungsgemäßen Mengenverhältnisse der Komponente A1, A2 und A3 kommt es bereits nach kurzer Zeit zu einer Entmischung der Polyolkomponente.

Weitere Angaben zu den Hilfsmitteln zu Zusatzstoffen finden sich beispielsweise im Kunststoffhandbuch, Band 7, Polyurethane, herausgegeben von Günter Oerkel, Carl-Hauser-Verlag, München, 3. Auflage 1993.

Zur Weiterverarbeitung zu Polyurethanen wird die Polyolkomponente mit Isocyanaten umgesetzt.

Zur Herstellung von Aerosolschäumen wird die Polyolkomponente vorzugsweise mit Diphenylmethandiisocyanat und seinen höheren Homologen umgesetzt. Besonders bevorzugt sind Gemische aus zwei- und mehrkernigen MDI, sogenanntes Roh-MDI. Die Polyurethanreaktion ist dabei so zu führen, daß mit Isocyanat-Überschuß gearbeitet wird. Der NCO-Gehalt der Prepolymeren beträgt dabei insbesondere 10-15 Gew.-%, vorzugsweise 11-13 Gew.-%.

Üblicherweise wird nach bekannten Verfahren ein Polyurethansemiprepolymer aus dem erfindungsgemäßen Gemisch unter Zusatz eines Polyisocyanats im stöchiometrischen Überschuß in einer Aerosoldose in Gegenwart von Flüssiggasen hergestellt.

Als Herstellungsverfahren ist aber auch der Eintrag eines in einem geschlossenen Reaktor vorgefertigten Semiprepolymers aus den oben genannten Bestandteilen in die jeweilige Aerosoldose und nachfolgende Zugabe der Flüssiggase möglich.

Das übliche Herstellungsverfahren für das Polyurethansemiprepolymer in der Aerosoldose gestaltet sich dabei wie folgt:

Die Polyolkomponente wird in der vorher berechneten Menge in die Aerosoldosen dosiert. Das Polyisocyanat wird in der vorher berechneten Menge, d.h. im stöchiometrischen Überschuß zugegeben. Die Aerosoldosen durchlaufen nachfolgend eine Verschlußvorrichtung und werden mit einem Ventil verschlossen. Sofort danach werden durch das Ventil die Flüssiggase in der gewünschten Art und Menge dosiert. In der nachfolgenden Schüttel- oder Taumelanlage werden die in der Aerosoldose befindlichen Mischungsbestandteile intensiv vermischt und homogenisiert. Bei der nachfolgend einsetzenden Reaktion wird in den Aerosoldosen das Polyurethansemiprepolymer synthetisiert. Nach 24 Stunden Wärmelagerung bei 50°C oder ca. 3 Tage Lagerung bei Raumtemperatur ist die Reaktion soweit abgeschlossen, daß der Polyurethan-einkomponenten-Aerosolschaum verwendungsfähig ist.

Bei seiner Anwendung wird das Polyurethansemiprepolymer in der oben beschriebenen Zusammensetzung durch das Ventil, je nach Ventilart, entweder über ein Mischrohr oder eine entsprechende Pistole ausgetragen bzw. an den gewünschten Ort der Anwendung dosiert. Das Polyurethansemiprepolymer schäumt auf, fixiert die zu montierenden Bauteile bzw. füllt bautechnisch bedingte Hohlräume aus und härtet mit Luftfeuchtigkeit bzw. mit dem vor der Montage zugesetztem Wasser aus dem Untergrund aus.

Der Schaum der beschriebenen Art unter Verwendung der erfindungsgemäßen Polyolkomponente zeichnet sich durch verbesserte Eigenschaften aus. So besitzt er eine höhere Festigkeit, bei verbesserter Dehnung sowie eine verbesserte Elastizität als vergleichbare Produkte. Weitere Vorteile des Schaumes liegen in seiner Tieftemperaturverarbeitbarkeit. Die bisher bekannten Polyurethanpolyharnstoff-einkomponenten-schäume haben den Nachteil bei ihrer Verarbeitung und nachfolgenden Aushärtung bei Temperaturen <10°C, insbesondere bei Temperaturen <5°C, daß sie total verspröden und im Extremfall bei Beanspruchung in diesem Temperaturbereich kurz nach der Aushärtung eine zerkrümelnde Masse ohne jegliche Festigkeit bilden. Hier zeigt sich der Vorteil des unter Verwendung der erfindungsgemäßen Polyolkomponente hergestellten Einkomponentenschaumes. Er zeigt keinerlei Sprödigkeit der beschriebenen Art und hier zeigen sich die vorteilhaften Eigenschaften des speziellen Gemisches der alkoxylierten Fettsäureester, d.h. der modifizierten Naturstoffpolyole. Sie verleihen dem Schaum auch im Tieftemperaturbereich die nötige Elastizität und dies auch bei hoher Festigkeit. Wie bereits oben beschrieben, liegt ein weiterer Vorteil des Schaumes in seiner verbesserten flammhemmenden Wirkung. Der Synergismuseffekt durch aromatische Strukturen sowie durch Esterstrukturen im Polymeren in Kombination mit üblichen Organohologenphosphat-Flammschutzmitteln, ergibt eine hohe Flammschutzwirkung, die nach bekannten Lösungen nur durch hohe Anteile teurer reaktiver Flammschutzpolyole möglich ist. Damit ergibt sich eine besonders ökonomische Möglichkeit den Polyurethanpolyharnstoff-einkomponentenschaum flammhemmend auszurüsten, entsprechend den Forderungen der Baustoffbrandklasse B2 nach DIN 4102.

Die Erfindung soll in den nachfolgenden Ausführungsbeispielen näher erläutert werden.

### Ausführungsbeispiel 1:

Aus 330 Gramm eines Recyclingpolyesters aus Polyethylenterephthalat, Adipinsäure und Diethylenglykol mit einer OH-Zahl von 76 mg KOH/g, 140 Gramm eines ethoxylierten Glyzerinesters einer dimeren Fettsäure mit einer OH-Zahl von 126 mg KOH/g, 77 Gramm ethoxyliertem Rizinusöl mit einer OH-Zahl von 85 mg KOH/g und 330 Gramm Trichlorpropylphosphat wird ein Gemisch hergestellt.

Diesem Gemisch werden 15 Gramm Vernetzer (ein alkoxyliertes Trimethylolpropan OH-Zahl von 875 mg KOH/g), 25 Gramm eines Schaumstabilisators, 9 Gramm Dimorpholinodiethylether als Katalysator und 79 Gramm 4-Methyl-4-hydroxy-pentan-2-on als Monool zugesetzt und intensiv vermischt. Es entsteht eine einheitliche homogene Flüssigphase.

In einer 1-Liter Aerosoldose werden 300 Gramm diese Zusätze enthaltenden polyolischen Gemisches eingefüllt. Nach Zugabe von 380 Gramm eines Polyisocyanats wird die Aerosoldose mit einem Ventil gasdicht verschlossen. Durch das Ventil werden sofort danach 70 Gramm Tetrafluorethan, 45 Gramm Dimethylether, 26 Gramm Butan und 6 Gramm Propan in die Aerosoldose dosiert. Durch intensives Schütteln wird der Doseninhalt homogenisiert und die Prepolymersynthese setzt ein. Nach einer Wärmelagerung von ca. 24 Stunden bei 50°C ist die Prepolymersynthese soweit abgeschlossen, daß die Aerosoldose verwendbar ist. Der aus der Aerosoldose nach Ventilöffnung austretende Schaum zeichnet sich durch folgende Eigenschaften aus, die im Vergleich mit bisher handelsüblichem Einkomponentenschaum in der folgenden Übersicht dargestellt werden:

| Eigenschaft/Merkmal | Schaum nach Beispiel 1 | FCKW-freier Montageschaum der Fa. SOUDAL |
|---|---|---|
| Zugfestigkeit (N/cm²) | 11,8 | 8 |
| Bruchdehnung (%) | 36 | 23 |
| Scherfestigkeit (N/cm²) | 6,2 | 5 |
| Druckspannung (N/cm²) | 6,8 | 5 |

Die geringe Viskosität des in der Aerosoldose befindlichen Prepolymers ergibt sich indirekt dadurch, daß sich die Aerosoldose besser entleeren läßt und der verbleibende Rest wesentlich geringer ist (20 Gramm) als bei den handelsüblichen Aerosoldosen (ca. 50-70 Gramm). Der Schaum ist bei 5°C ohne Probleme verarbeitbar. Er zeigt keinerlei Versprödungserscheinungen in diesem Temperaturbereich.

Er besitzt darüberhinaus flammhemmende Eigenschaften und dies ohne Flammschutzpolyole, die zumeist teuer und schwierig zu handhaben sind.

### Ausführungsbeispiel 2:

Aus 280 Gramm eines Recyclingpolyesters aus Polyethylenterephthalat, Adipinsäure und Diethylenglykol mit einer OH-Zahl von 76 mg KOH/g, 118 Gramm eines ethoxylierten Glyzerinesters einer dimeren Fettsäure mit einer OH-Zahl von 110 mg KOH/g, 120 Gramm ethoxyliertem Rizinusöl mit einer OH-Zahl von 78 mg KOH/g, 24 Gramm eines Polyethers auf Basis Glyzerin/Ethylenoxyd mit einer OH-Zahl von 240 mg KOH/g und 320 Gramm Trichlorpropylphosphat wird ein Gemisch hergestellt.

Diesem Gemisch werden 15 Gramm Vernetzer (ein alkoxyliertes Trimethylolpropan OH-Zahl von 875 mg KOH/g), 25 Gramm eines Schaumstabilisators, 9 Gramm Dimorpholinodiethylether als Katalysator und 89 Gramm 4-Methyl-4-hydroxy-pentan-2-on als Monool zugesetzt und intensiv vermischt. Es entsteht eine einheitliche homogene Flüssigphase.

In einer 1-Liter Aerosoldose werden 310 Gramm diese Zusätze enthaltenden polyolischen Gemisches eingefüllt. Nach Zugabe von 370 Gramm eines Polyisocyanats wird die Aerosoldose mit einem Ventil gasdicht verschlossen. Durch das Ventil werden sofort danach 70 Gramm Tetrafluorethan, 45 Gramm Dimethylether, 26 Gramm Butan und 6 Gramm Propan in die Aerosoldose dosiert. Durch intensives Schütteln wird der Doseninhalt homogenisiert und die Prepolymersynthese setzt ein. Nach einer Wärmelagerung von ca. 24 Stunden bei 50°C ist die Prepolymersynthese soweit abgeschlossen, daß die Aerosoldose verwendbar ist. Der aus der Aerosoldose nach Ventilöffnung austretende Schaum zeichnet sich durch folgende Eigenschaften aus, die im Vergleich mit bisher handelsüblichem Einkomponentenschaum in der folgenden Übersicht dargestellt werden:

| Eigenschaft/Merkmal | Schaum nach Beispiel 2 | FCKW-freier Montageschaum der Fa. SOUDAL |
|---|---|---|
| Zugfestigkeit (N/cm²) | 10,6 | 8 |
| Bruchdehnung (%) | 38 | 23 |
| Scherfestigkeit (N/cm²) | 6,1 | 5 |
| Druckspannung (N/cm²) | 7,2 | 5 |

Die geringe Viskosität des in der Aerosoldose befindlichen Prepolymers ergibt sich indirekt dadurch, daß sich die Aerosoldose besser entleeren läßt und der verbleibende Rest wesentlich geringer ist (25 Gramm) als bei den handelsüblichen Aerosoldosen (ca. 50-70 Gramm). Der Schaum ist bei 5°C ohne Probleme verarbeitbar. Er zeigt keinerlei Versprödungserscheinungen in diesem Temperaturbereich.

Er besitzt darüberhinaus flammhemmende Eigenschaften und dies ohne Flammschutzpolyole, die zumeist teuer und schwierig zu handhaben sind.

### Ausführungsbeispiel 3:

Aus 330 Gramm eines Recyclingpolyesters aus Polyethylenterephthalat, Adipinsäure und Diethylenglykol mit einer OH-Zahl von 76 mg KOH/g, 120 Gramm eines ethoxylierten Glyzerinesters einer dimeren Fettsäure mit einer OH-Zahl von 126 mg KOH/g, 42 Gramm ethoxyliertem Rizinusöl mit einer OH-Zahl von 78 mg KOH/g, 60 Gramm eines Polyethylenglykols mit einer OH-Zahl von 185 mg KOH/g und 330 Gramm Trichlorpropylphosphat wird ein Gemisch hergestellt.

Diesem Gemisch werden 15 Gramm Vernetzer (ein alkoxyliertes Trimethylolpropan OH-Zahl von 875 mg KOH/g), 25 Gramm eines Schaumstabilisators, 9 Gramm Dimorpholinodiethylether als Katalysator und 69 Gramm 4-Methyl-4-hydroxy-pentan-2-on als Monool zugesetzt und intensiv vermischt. Es entsteht eine einheitliche homogene Flüssigphase.

In einer 1-Liter Aerosoldose werden 310 Gramm diese Zusätze enthaltenden polyolischen Gemisches eingefüllt. Nach Zugabe von 370 Gramm eines Polyisocyanats wird die Aerosoldose mit einem Ventil gasdicht verschlossen. Durch das Ventil werden sofort danach 70 Gramm Tetrafluorethan, 45 Gramm Dimethylether, 26 Gramm Butan und 6 Gramm Propan in die Aerosoldose dosiert. Durch intensives Schütteln wird der Doseninhalt homogenisiert und die Prepolymersynthese setzt ein. Nach einer Wärmelagerung von ca. 24 Stunden bei 50°C ist die Prepolymersynthese soweit abgeschlossen, daß die Aerosoldose verwendbar ist. Der aus der Aerosoldose nach Ventilöffnung austretende Schaum zeichnet sich durch folgende Eigenschaften aus, die im Vergleich mit bisher handelsüblichem Einkomponentenschaum in der folgenden Übersicht dargestellt werden:

| Eigenschaft/Merkmal | Schaum nach Beispiel 2 | FCKW-freier Montageschaum der Fa. SOUDAL |
|---|---|---|
| Zugfestigkeit (N/cm²) | 11,2 | 8 |
| Bruchdehnung (%) | 29 | 23 |
| Scherfestigkeit (N/cm²) | 6,9 | 5 |
| Druckspannung (N/cm²) | 7,3 | 5 |

Die geringe Viskosität des in der Aerosoldose befindlichen Prepolymers ergibt sich indirekt dadurch, daß sich die Aerosoldose besser entleeren läßt und der verbleibende Rest wesentlich geringer ist (32 Gramm) als bei den handelsüblichen Aerosoldosen (ca. 50-70 Gramm). Der Schaum ist bei 5°C ohne Probleme verarbeitbar. Er zeigt keinerlei Versprödungserscheinungen in diesem Temperaturbereich.

Er besitzt darüberhinaus flammhemmende Eigenschaften und dies ohne Flammschutzpolyole, die zumeist teuer und schwierig zu handhaben sind.

## Patentansprüche

1. Phasenstabile Polyolkomponente, enthaltend
A1) mindestens einen Polyether- und/oder Polyetheresterpolyalkohol,
A2) mindestens ein Polyesterpolyol
A3) mindestens ein flüssiges additives Flammschutzmittel
wobei die Bestandteile A1:A2:A3 im Gewichtsverhältnis 10±4,5:13±4:14±4,5 vorliegen.

2. Phasenstabile Polyolkomponente nach Anspruch 1, dadurch gekennzeichnet, daß die Komponente A1 ein mittleres Molekulargewicht von mindestens 500 g/mol aufweist.

3. Phasenstabile Polyolkomponente nach Anspruch 1, dadurch gekennzeichnet, daß die Komponente A2 ein mittleres Molekulargewicht von mindestens 500 g/mol aufweist.

4. Phasenstabile Polyolkomponente nach Anspruch 1, dadurch gekennzeichnet, daß die Komponente A1 5 bis 95 Gew.-%, bezogen auf A1, mindestens eines alkoxylierten Fettsäureesters enthält.

5. Phasenstabile Polyolkomponente nach Anspruch 1, dadurch gekennzeichnet, daß als alkoxylierte Fettsäureester alkoxyliertes Rizinusöl verwendet wird.

6. Phasenstabile Polyolkomponente nach Anspruch 1, dadurch gekennzeichnet, daß als alkoxylierte Fettsäureester alkoxyliertes Rizinusöl mit einem mittleren Molekulargewicht von mindestens 1100 g/mol verwendet wird.

7. Phasenstabile Polyolkomponente nach Anspruch 1, dadurch gekennzeichnet, daß die alkoxylierten Fettsäureester ethoxyliert sind.

8. Phasenstabile Polyolkomponente nach Anspruch 1, dadurch gekennzeichnet, daß als alkoxylierte Fettsäureester alkoxylierte Glycerin-Fettsäureester eingesetzt werden.

9. Phasenstabile Polyolkomponente nach Anspruch 1, dadurch gekennzeichnet, daß als alkoxylierte Fettsäureester Alkoxylierungsprodukte aus Gemischen von Glycerinestern dimerer Fettsäuren mit Anteilen von monomeren Fettsäuren und trimeren Fettsäuren und freiem Glycerin eingesetzt werden.

10. Phasenstabile Polyolkomponente nach Anspruch 1, dadurch gekennzeichnet, daß die Komponente A2) ein mittleres Molekulargewicht von mindestens 500 g/mol aufweist.

11. Phasenstabile Polyolkomponente nach Anspruch 1, dadurch gekennzeichnet, daß als Polyesterpolyol mindestens ein Umsetzungsprodukt aus mindestens einer Dicarbonsäure, einem Polyalkylenterephthalat und mindestens einem Diol eingesetzt wird.

12. Phasenstabile Polyolkomponente nach Anspruch 11, dadurch gekennzeichnet, daß als Polyesterpolyol Umsetzungsprodukte aus einer Dicarbonsäure, Polyethylenterephthalat und/oder Polybutylenterephthalat und mindestens einem Diglykol eingesetzt werden.

13. Phasenstabile Polyolkomponente nach Anspruch 12, dadurch gekennzeichnet, daß Polyethylenterephthalat und Polybutylenterephthalat in Form von Recyclingmaterial eingesetzt werden.

14. Phasenstabile Polyolkomponente nach Anspruch 13, dadurch gekennzeichnet, daß das Polyethylenterephthalat-Recyclingmaterial in Form von Pulver oder Granulat eingesetzt wird.

15. Phasenstabile Polyolkomponente nach Anspruch 12, dadurch gekennzeichnet, daß als Polyethylenterephthalat-Recyclingmaterial in Form von Polyethylenterephthalatkunststoffaserabfällen eingesetzt wird.

16. Phasenstabile Polyolkomponente nach Anspruch 1, dadurch gekennzeichnet, daß das flüssige additive Flammschutzmittel A3 mindestens ein organisches Alkyl-Phosphat und/oder mindestens ein organisches Alkyl-Phosphonat ist.

17. Phasenstabile Polyolkomponente nach Anspruch 1, dadurch gekennzeichnet, daß das flüssige additive Flammschutzmittel A3 mindestens ein halogeniertes Alkylphosphat und/oder mindestens ein halogeniertes Alkylphosphonat ist.

18. Verfahren zur Herstellung von gegebenenfalls zelligen Polyurethanen durch Umsetzung von
a) Polyisocyanaten
b) höhermolekularen Verbindungen mit mindestens zwei reaktiven Wasserstoffatomen und gegebenenfalls
c) niedermolekularen Kettenverlängerungs- und/oder Vernetzungsmitteln
in Gegenwart von
d) Katalysatoren sowie gegebenenfalls
e) Treibmitteln f) Hilfsmitteln und Zusatzstoffen,
dadurch gekennzeichnet, daß als höhermolekulare Verbindungen mit mindestens zwei Hydroxylgruppen eine Polyolkomponente gemäß Anspruch 1 eingesetzt wird.

19. Isocyanatgruppenhaltiges Prepolymer für Aerosolschäume, herstellbar durch Umsetzung einer Polyolkomponente gemäß Anspruch 1 mit einem Polyisocyanat.

20. Isocyanatgruppenhaltiges Prepolymer nach Anspruch 19, dadurch gekennzeichnet, daß als Polyisocyanat Roh-MDI eingesetzt wird.

21. Aerosolschaum, herstellbar durch Verschäumen eines isocyanatgruppenhaltigen Prepolymers nach Anspruch 19.
